# DEMANDE DE BREVET EUROPEEN

(11) **EP 0 575 238 A1**
(43) Date de publication de la demande: **22.12.1993**
(21) Numéro de dépôt: 93401525.6
(22) Date de dépôt: 15.06.1993
(51) Int. Cl.: A01K 93/00

(54) **Flotteur à sensibilité réglable pour ligne de pêche**

(30) Priorité: 18.06.1992 FR 9207443
(71) Demandeur: Gargatte, Jean-Pierre, F-24660 Coulounieix-Chamiers (FR); Gargatte, Michel, F-94370 Noiseau, Sucy-en-Brie (FR)
(72) Inventeur: Gargatte, Jean-Pierre, F-24660 Coulounieix-Chamiers (FR); Gargatte, Michel, F-94370 Noiseau, Sucy-en-Brie (FR)
(74) Mandataire: Hasenrader, Hubert

(57) **Abrégé**

Le flotteur comporte deux parties tubulaires télescopiques (1, 2) montées coulissantes l'une dans l'autre par l'intermédiaire d'un joint (11), la partie supérieure (1) étant munie d'une antenne (4) tandis que la partie inférieure (2) comporte un moyen (5 à 7) d'attache du fil (8) de la ligne.

Selon l'invention, la chambre (9) du flotteur est mise en légère surpression interne et le joint (11) est étanche jusqu'à une valeur limitée de cette surpression.

## Description

La présente invention concerne un flotteur à sensibilité réglable pour ligne de pêche.

Un flotteur de ce type est décrit dans le brevet français n° 2 597 718 et comporte deux parties tubulaires montées coulissantes l'une dans l'autre. La partie supérieure est munie d'une antenne, tandis que la partie inférieure présente un oeilleton pour le libre passage du fil de la ligne entre deux plombs d'arrêt sertis sur ce fil.

Ces deux parties délimitent entre elles une chambre pneumatique dont la capacité est réglable par translation télescopique de l'une dans l'autre. L'étanchéité entre lesdites parties est assurée par un joint torique. En outre la partie inférieure présente un trou de communication avec l'extérieur pour aspirer ou expulser de l'air ou de l'eau.

La pression dans la chambre est donc sensiblement égale à la pression atmosphérique et dès lors, le coulissement relatif des parties télescopiques devrait être libre s'il n'était pas légèrement freiné par le joint torique ou s'il ne risquait pas d'être perturbé notamment par la présence de corps étrangers tels que du sable ou de la boue colmatant la jonction desdites parties au niveau du joint. Dans ces conditions, le réglage de la capacité de ladite chambre et donc de la sensibilité de la ligne n'est pas aussi facile qu'il paraît.

D'autres flotteurs connus comportent deux parties cylindriques télescopiques l'une par rapport à l'autre. La partie extérieure présente, sur sa face interne, une rainure circulaire destinée à recevoir un joint annulaire qui assure une liaison étanche, de telle sorte que lorsque la partie intérieure est télescopée dans la partie extérieure, l'air contenu dans le flotteur est comprimé. Le système de fermeture de l'ensemble est compliqué et est constitué par une crémaillère coopérant avec une barrette extérieure. De plus, afin d'éviter tout désengagement partiel des deux parties, le fil de pêche doit être fixé à la fois à l'extrémité supérieure et à l'extrémité inférieure du flotteur et doit être mis sous tension entre ces deux extrémités sur le côté du flotteur diamétralement opposé au système de fermeture sus-mentionné.

Le réglage de la capacité de tels flotteurs est donc complexe puisqu'il impose de modifier à la fois la position du système de fermeture et celle du fil de pêche. De plus, la sensibilité de ce réglagle est limité par l'espacement des crans de la crémaillère du système de fermeture.

La présente invention a pour but de sensibiliser le réglage du flotteur et de le rendre plus facile, plus précis et plus fidèle en en minimisant les frottements et en s'opposant à toute pénétration d'eau ou de corps étrangers.

Dans ce but et conformément à l'invention, une légère surpression interne est entretenue dans la chambre du flotteur. Cette légère surpression permet d'éliminer les frottements indésirables et s'oppose à toute pénétration d'eau ou de corps étrangers susoeptibles de gêner le déplacement télescopique des deux parties tubulaires du flotteur.

Le réglage est facilité d'une part grâce au fait que le joint est étanche jusqu'à une valeur limitée de la surpression interne dans la chambre du flotteur et d'autre part grâce au fait que ce même joint entretient une coopération à force entre les deux parties du flotteur. Ainsi, la position de réglage choisie est conservée sans nécessiter aucun système à crémaillère et à barrette ni aucune coopération des deux parties par vissage.

Selon l'invention, les parties du flotteur sont tubulaires et en matière plastique relativement souple et le joint est solidaire de l'une d'elles.

La partie tubulaire intérieure est enfoncée à force dans la partie tubulaire extérieure par l'intermédiaire du joint. Ainsi, la capacité de la chambre du flotteur peut très facilement être diminuée par simple télescopage de la partie intérieure dans la partie extérieure. La position désirée est automatiquement maintenue sous l'effet de la coopération à force des deux parties tubulaires.

De plus, le joint est étanche jusqu'à une valeur limitée de la surpression, c'est-à-dire que lorsque la surpression dans la chambre atteint une valeur déterminée, le joint est susceptible de se déformer élastiquement pour laisser s'échapper l'air en excès.

Cette caractéristique permet d'éviter qu'une surpression excessive ne conduise les deux parties du flotteur à se déplacer l'une par rapport à l'autre en modifiant le réglage.

Selon un mode particulier de réalisation, le joint est constitué par au moins une ondulation annulaire de l'une des deux parties du flotteur. Cette ondulation peut être une déformation vers l'intérieur de l'élément extérieur ou une déformation vers l'extérieur de l'élément intérieur. Elle est de toute façon formée près de l'embouchure de l'un des éléments et coopère avec la paroi non déformée de l'élément conjugué.

Une telle ondulation formant joint augmente la rigidité de la partie du flotteur sur laquelle elle est formée et améliore sa résistance à des efforts radiaux.

La partie tubulaire inférieure fait corps avec une tige sur laquelle sont montées serrées deux bagues coulissantes destinées à pincer de façon réglable le fil de la ligne, le fil traversant lesdites bagues et formant autour de la bague supérieure une boucle dont le brin de retour traverse également la bague inférieure.

Divers autres caractéristiques et avantages de l'invention ressortent d'ailleurs de la description détaillée qui suit.

Une forme de réalisation de l'objet de l'invention est représentée, à titre d'exemple non limitatif, sur le dessin annexé.

Sur ce dessin:
- la figure 1 est une élévation-coupe d'un flotteur conforme à l'invention,
- la figure 2 est une vue agrandie du détail marqué II sur la figure 1,
- la figure 3 est une perspective illustrant le montage du flotteur sur une ligne.

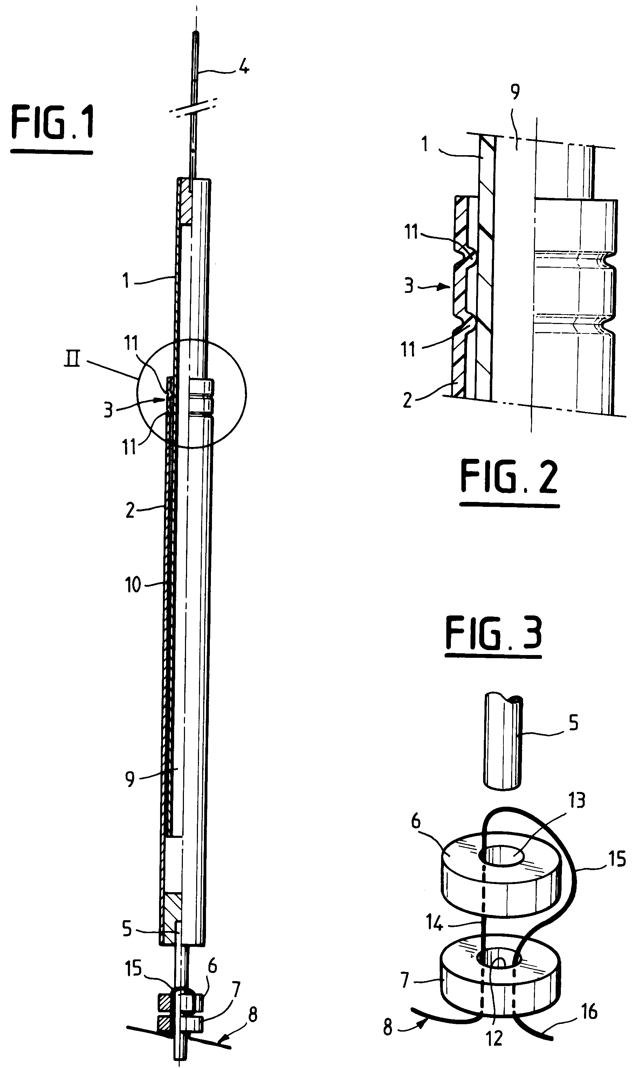

Comme le montrent les figures 1 à 3, le flotteur comporte deux éléments tubulaires télescopiques 1 et 2 montés coulissants l'un dans l'autre au niveau d'un joint 3 solidaire de l'un des éléments, I'élément 2 dans l'ensemble représenté.

L'élément tubulaire supérieur 1 fait corps avec une antenne 4 et l'élément tubulaire inférieur 2 avec une tige 5. Sur cette tige sont enfilées légèrement serrées, deux bagues 6 et 7 permettant de pincer le fil 8 de la ligne, à n'importe quel endroit afin de régler la profondeur d'immersion de l'hameçon.

Ces éléments délimitent entre eux une chambre pneumatique 9 dont la capacité est réglable par translation d'un élément enfoncé à force dans l'autre. Dès lors, ce réglage permet d'améliorer la sensibilité de la ligne suivant les conditions de pêche.

Un faible jeu 10 est prévu entre lesdits éléments. Malgré cela ceux-ci portent l'un contre l'autre près de l'embouchure de l'élément situé à l'extérieur qui dans l'exemple représenté, est l'élément inférieur 2. Le joint qui assure l'étanchéité du flotteur et par l'intermédiaire duquel l'enfoncement à force est réalisé, est assuré par au moins une ondulation annulaire 11, deux dans cet exemple, dont la crête intérieure présente un diamètre tel que, par déformation élastique de ladite crête et/ou de l'élément supérieur 1, un contact circulaire à force est établi entre les deux éléments.

D'ailleurs, les éléments 1 et 2 sont avantageusement constitués par une matière plastique semi-rigide qui, cependant est légèrement déformable élastiquement.

Normalement, l'air contenu dans la chambre 9 est en faible surpression, étant donné d'une part, que l'élément supérieur 1 est enfoncé à force dans l'ondulation 11 de l'élément inférieur 2. Mais cette surpression est limitée car, à une certaine valeur, le joint formé par l'ondulation 11 se déforme élastiquement pour que l'air en excès s'échappe et reprend sa forme initiale pour assurer l'étanchéité lorsque la valeur optimale de la surpression précitée est à nouveau atteinte.

Ce processus fonctionne lorsqu'on diminue la capacité de la chambre 9 par enfoncement de l'élément supérieur 1 dans l'élément inférieur 2. Mais lorsque l'on veut augmenter ladite capacité, il ne faut pas se contenter de tirer sur l'élément supérieur 1 car on risquerait de mettre ladite chambre en dépression et ainsi de favoriser la pénétration de l'eau et/ou le colmatage de la jonction précitée par du sable, de la boue ou autre. Pour augmenter la capacité de la chambre 9, il faut dégager complètement l'élément supérieur 1 de l'élément inférieur 2 et l'enfoncer à nouveau pour générer une légère surpression dans ladite chambre 9.

Ainsi, le flotteur est étanche et sa chambre interne isole une capacité d'air sous pression mais avec possibilité d'échappement lorsque ladite pression atteint une valeur limite. Cette pression interne a pour avantage de s'opposer à toute pénétration d'eau ou de corps étrangers.

Bien entendu, la tige 5 et les bagues 6, 7 lestent le flotteur, de façon à ce que celui-ci s'équilibre en position verticale. Les bagues permettent également de pincer le fil 8 de la ligne de façon réglable. A cet effet, le brin montant 14 du fil traverse les trous 12 et 13 desdites bagues, puis forme une boucle 15 autour de la bague supérieure 6 ; le brin de retour 16 de la boucle passe entre les bagues et traverse le trou 12 de la bague inférieure 7. Lorsque lesdites bagues sont rapprochées, le fil est serré et pour déplacer le flotteur le long du fil il faut écarter ces bagues et tirer sur la boucle 15 pour faire coulisser soit le brin 15, soit le brin 16.

## Revendications

**1.-** Flotteur à sensibilité réglable pour ligne de pêche, comportant deux parties tubulaires télescopiques (1, 2) montées coulissantes l'une dans l'autre par l'intermédiaire d'un joint (11), la partie supérieure (1) étant munie d'une antenne (4) tandis que la partie inférieure (2) comporte un moyen (5 à 7) d'attache du fil (8) de la ligne, la chambre (9) du flotteur étant mise en légère surpression interne, caractérisé en ce que le joint (11) est solidaire d'une des deux parties tubulaires télescopiques (1, 2), en ce la partie tubulaire intérieure (1) est enfoncée à force dans la partie tubulaire extérieure (2) par l'intermédiaire du joint (11), et en ce que le joint (11) est élastiquement déformable et susceptible de laisser s'échapper l'air en excès, de telle sorte que la surpression dans la chambre (9) est limitée.

**2.-** Flotteur selon la revendication 1, caractérisé en ce que les parties (1, 2) du flotteur sont tubulaires en matière plastique relativement souple, et en ce que le joint (11) est constitué par au moins une ondulation annulaire d'une des parties tubulaires (2) établissant un contact circulaire avec l'autre partie tubulaire (1).

**3.-** Flotteur selon la revendication 1 ou 2, caractérisé en ce que la partie tubulaire inférieure (2) fait corps avec une tige (5) sur laquelle sont montées serrées deux bagues coulissantes (6, 7) destinées à pincer de façon réglable le fil (8) de la ligne, ce fil traversant lesdites bagues et formant autour de la bague supérieure (6) une boucle (15) dont le brin de retour (16) traverse également la bague inférieure (7).
